# EUROPEAN PATENT SPECIFICATION

(11) **EP 4 013 728 B1**
(45) Date of publication and mention of the grant of the patent: **07.06.2023**
(21) Application number: 20764938.5
(22) Date of filing: 14.08.2020
(51) Int. Cl.: C04B 33/00, C04B 18/00, C04B 18/08, C04B 20/00, C04B 20/02, C04B 33/135

(54) **PROCESS FOR PREPARING A GRANULAR CERAMIC MIXTURE**
VERFAHREN ZUR HERSTELLUNG EINER GRANULAREN KERAMIKMISCHUNG
PROCÉDÉ DE PRÉPARATION D'UN MÉLANGE DE CÉRAMIQUE GRANULAIRE

(30) Priority: 14.08.2019 EP 19191857
(43) Date of publication of application: 22.06.2022
(73) Proprietor: Vecor IP Holdings Limited, Kowloon, Tsimshatsui (HK)
(72) Inventor: SEVERIN, Erik J., Kowloon, Tsimshatsui (HK); FERNANDEZ, Erwin N., Kowloon, Tsimshatsui (HK); MISA, John Vincent A., Kowloon, Tsimshatsui (HK)
(74) Representative: Patent Boutique LLP
(86) International application number: PCT/EP2020/072869
(87) International publication number: WO 2021/028572

(56) References cited:
- RADOMIR SOKOLAR ET AL: "The effect of fluidized fly ash on the properties of dry pressed ceramic tiles based on fly ashclay body", CERAMICS INTERNATIONAL, ELSEVIER, AMSTERDAM, NL, vol. 37, no. 7, 2 May 2011 (2011-05-02), pages 2879-2885, XP028238425, ISSN: 0272-8842, DOI: 10.1016/J.CERAMINT.2011.05.005 [retrieved on 2011-05-10]
- HÚLAN TOMÁS ET AL: "The study of firing of a ceramic body made from illite and fluidized bed combustion fly ash", JOURNAL OF THERMAL ANALYSIS AND CALORIMETRY, KLUWER, DORDRECHT, NL, vol. 127, no. 1, 28 April 2016 (2016-04-28), pages 79-89, XP036133679, ISSN: 1388-6150, DOI: 10.1007/S10973-016-5477-8 [retrieved on 2016-04-28]
- Lucie Vodova ET AL: "The Effect of CaO Addition on Mechanical Properties of Ceramic Tiles", , 19 June 2014 (2014-06-19), XP055747602, DOI: 10.5281/zenodo.2812911 Retrieved from the Internet: URL:http://doi.org/10.5281/zenodo.2812912

## Description

### Field of the invention

The present invention relates to the incorporation of fluid bed combustion fly ash, and especially circulating fluid bed combustion fly ash into a granular ceramic mixture.

### Background to the invention

### Fluid bed combustion (FBC) power plants versus pulverized coal combustion (PCC) power plants

Large quantities of fly ash are produced as a result of coal-fired electricity generation. This will continue into the foreseeable future. There is interest in how to utilise this fly ash waste material. Much fly ash is currently used in concrete as a pozzolan or cementitious material. Other uses include brick making and as a soil stabilisation material. However, much fly ash continues to go to landfill. This has obvious environmental, as well as economic, costs. There is therefore ongoing value and interest in developing products and processes that can use fly ash as a raw material. This minimises the amount of fly ash going to landfill and reduces the amounts of other virgin raw materials used.

The question of how to re-utilise the fly ash from power generation has become harder due to the introduction of fluidised bed combustion (FBC) technologies for thermal power generation and incineration. Fluidised bed combustion (FBC) plant designs are quite different to the pulverised coal combustion (PCC) plant designs that have been standard for power plants for many decades. The fly ash produced by FBC plants is different to PCC fly ash, and FBC fly ash is much harder than PCC fly ash to re-use in other applications such as ceramic production.

Fluidised bed combustors burn the coal in a heated fluidised bed of ash and/or sand at lower temperatures than PCC designs. Fluidised bed combustion (FBC) designs include "bubbling" fluidised beds as well as "circulating" fluidised bed designs. A bubbling fluid bed is also referred to as a "boiling fluid bed". Circulating fluidised beds, known as CFBs, are most common. The various FBC designs can be further divided based on the pressures at which they run, either atmospheric or pressurised.

A circulating fluid bed (CFB) furnace operates by continuously recycling most of the hot ash (including any fine unburnt fuel) from the exhaust stream coming from the combustion zone back into the base of the fluidised bed combustion zone. A proportion of the finest fly ash is continuously removed from the exhaust and fresh fuel and additives are continuously added to the combustion zone. This system has many advantages including very high levels of carbon burn (due to the repeated passes of burning particles through the combustion zone) plus the fuel does not have to be pulverised before addition to the combustion zone. The extended time at elevated temperatures and the high levels of particle: particle interactions that ash particles experience in a CFB design gives opportunity for mineral phases that are not normally seen in PCC ashes to form.

Fluidised bed combustion (FBC) technology is becoming increasingly popular since plants using such technologies are less polluting. FBC plants emit much lower levels of nitrous oxides than conventional PCC plants, the removal of sulfur oxides is easier, and FBC plants can burn a wider range of fuels such as low-grade coal, and even fuels such as tyres and oil. Often these lower-grade fuels have a high sulfur content.

The solid/solid contact with hot particles in FBC plant designs gives very high heat exchange coefficients. This means that FBC plants can produce power efficiently at much lower temperatures: typically, between 800 - 900 °C, compared to 1400 - 1700 °C in a PCC plant. Being able to operate efficiently at lower combustion temperatures has large advantages. In particular, the formation of nitrous oxides is lower in FBC plants, and NOₓ pollution is therefore reduced.

The removal of sulfur oxides is also simpler in FBC plants as compared to PCC plants. Typically, PCC plants burn higher quality, lower sulfate coals such as anthracite. Typically, PCC plants have wet scrubbers which treat the exhaust gases to chemically remove the sulfur oxides via a process called flue gas desulfurisation (FGD). This is a costly and intensive process.

In contrast to PCC plants, FBC plants typically reduce their sulfur oxide emissions by burning a mixture of fuel and limestone/chalk/dolomite. The limestone material (calcium carbonate) forms calcium oxide within the fluidised bed. This reacts with sulfur oxides from the combustion of sulfur compounds in the fuel to form calcium sulfate *in-situ.* This is possible as the temperatures are low enough in the fluidised bed for calcium sulfate minerals such as anhydrite to be stable and readily formed.

Such reactions would not be possible in a PCC plant due to the high temperatures used. Hence their need for a separate FGD system.

The addition of limestone material to the coal to allow sulfur oxides to react *in-situ* is a much simpler process than having to scrub the flue gases.

### The differences between fluid bed combustion (FBC) fly ash and pulverised coal combustion (PCC) fly ash

The addition of significant amounts of limestone material to the boiler in a fluid bed combustion (FBC) plant means that the fluid bed combustion (FBC) fly ash typically comprises high levels of calcium species and sulfur species.

The levels of calcium species in FBC fly ash, usually reported as the equivalent calcium oxide level, are often higher than even high calcium oxide (Type C) fly ashes from PCC plants.

In addition, the levels of sulfur species in FBC fly ash, usually reported as the equivalent sulfur oxide level, are higher than the sulfur oxide level of PCC fly ash.

The ASTM-C618 standard is commonly used to define suitable fly ash quality for use as a pozzolan or cementitious product. The upper SO₃ limit for materials to meet ASTM-C618 is 5wt%. FBC fly ash typically comprises a much higher level of oxide of sulfur.

Physically, the fly ash from FBC designs is quite different to conventional PCC fly ash. The FBC fly ash has not been subjected to the very high temperatures encountered in the exhaust systems of conventional PCC plants. The fly ash produced in PCC plants has been suspended in the very hot effluent combustion gases. The temperatures experienced are high enough to melt particles. This means that the large majority of PCC fly ash particles are spherical and formed of glassy amorphous phases.

In contrast, fly ash from FBC plants, and especially CFB combustion plants, will not have been melted due to the lower temperatures of the FBC. As a result, the FBC fly ash particles have an irregular shape and do not contain glassy phases. Another difference is that the time for which the fly ash has been subjected to high temperatures is typically much longer in FBC plants, especially those plants where high levels of fly ash are recirculated, such as in a CFB combustion plant. This means, for example, that, whilst the iron in PCC fly ash is often present as magnetite and hematite, in FBC fly ash, and CFB combustion fly ash, it is mostly present as ferrite. This has major implications, for example, the ease of iron removal.

PCC and FBC fly ash are different chemically (e.g. typically having different levels of calcium species and sulfate species), different physically (e.g. typically having different morphologies, e.g. regular/glassy (PCC) compared to irregular/non-glassy (FBC)), and different mineralogically. FBC fly ash also has a smaller diameter than PCC fly ash (due to a self-grinding action) and has a lower residual carbon level compared to PCC fly ash.

### The problem of incorporating fluid bed combustion (FBC) fly ash, and especially circulating fluid bed (CFB) combustion fly ash, in a granular ceramic mixture

Most of the FBC fly ash is currently sent to landfill or used as a very low value soil stabilisation agent. It is less effective than PCC fly ash as a pozzolan. In addition, the high sulfate levels can cause problems. There is a growing need to find alternative uses for FBC fly ash. A potential high-value use is in ceramic articles such as ceramic floor tiles and porcelain floor tiles.

Fly ash can be used as a partial replacement for clays in ceramic articles. Fly ash can be combined with clay and other materials such as feldspar to form granular ceramic mixtures. The granular ceramic mixtures can then be formed into ceramic articles, such as ceramic tiles and especially porcelain floor tiles. Such ceramic articles can be made with significant levels of fly ash and this is known in the art.

The replacement of clay by fly ash is beneficial as supplies of suitable clay are becoming limited. Maximising the practical level of clay that can be replaced by fly ash is beneficial. However, the fly ashes used in the art are mostly PCC fly ash. FBC, and particularly CFB combustion, technology is a relatively recent development, and was not in use when earlier ceramic art was developed. Hence issues relating specifically to the use of FBC fly ash in ceramics applications were not recognised, or even relevant, to most of this body of fly ash work. For example, the art describes fly ash as consisting of spheres of amorphous, glassy phases, which is a description of PCC fly ash and not FBC fly ash. It is clear that the art is referring to PCC fly ash. Sokolar and Vodova studied the effect of fluidized fly ash on the properties of dry pressed ceramic tiles based on fly ash-clay body: Ceramics International 37 (2011) 2879-2885.

The inventors have discovered that simply replacing PCC fly ash with FBC fly ash, and especially CFB combustion fly ash in ceramic compositions that also contain clays, feldspars and optionally other ingredients, can cause defects. Ceramic articles made using FBC fly ash have been observed to crack during the firing cycle. This is particularly problematic when making high quality, large ceramic items such as ceramic floor tiles, and especially porcelain floor tiles, where such defects are particularly unacceptable. The incorporation of fly ash into porcelain floor tiles, which need to have low water absorption and high flexural strength, is particularly challenging.

The inventors have also seen that this problem is exacerbated when the FBC fly ash is used at higher levels in ceramics applications.

Without wishing to be bound by theory, it is hypothesised that the high energy environment of a typical ceramics production process, and the high level of intense surface/surface contacts between clay and FBC fly ash particles results in the formation of higher levels of specific mineral phases which change the firing behaviour of the material. This in turn, leads to cracking of the ceramic articles.

The inventors have discovered that the problems associated with the incorporation of FBC fly ash, and especially CFB combustion fly ash, into granular ceramic mixtures can be overcome if the FBC fly ash is treated with an aqueous acid solution during the process of preparing the granular ceramic mixture. This allows FBC fly ash, and especially CFB combustion fly ash, to be incorporated into granular ceramic mixtures, that can then be formed into ceramic articles, such as ceramic floor tiles and porcelain floor tiles, without the problem of cracking.

Without wishing to be bound by theory, it is hypothesised that the acid treatment of FBC fly ash, and its subsequent incorporation into the granular ceramic mixture results in the formation of different mineral compositions and phases that have a different thermal behaviour and do not crack as readily.

### Summary of the invention

The present invention provides a process for preparing a granular ceramic mixture, wherein the process comprises the steps of:
(a) contacting fluid bed combustion fly ash with an acidic aqueous solution to obtain acidic fluid bed combustion fly ash slurry;
(b) removing excess acid from the slurry obtained in step (a) to obtain solid acid treated fluid bed combustion fly ash;
(c) contacting together:
   (i) the solid acid treated fluid bed combustion fly ash obtained in step (b);
   (ii) clay;
   (iii) optionally, feldspar; and
   (iv) optionally, other ingredients.
to form the granular ceramic mixture.

### Detailed description of the invention

### Process for preparing a granular ceramic mixture

The process for preparing a granular ceramic mixture comprises the steps of:
(a) contacting fluid bed combustion fly ash with an acidic aqueous solution to obtain acidic fluid bed combustion fly ash slurry;
(b) removing excess acid from the slurry obtained in step (a) to obtain solid acid treated fluid bed combustion fly ash;
(c) contacting together:
   (i) the solid acid treated fluid bed combustion fly ash obtained in step (b);
   (ii) clay;
   (iii) optionally, feldspar; and
   (iv) optionally, other ingredients.

Treating the FBC fly ash with aqueous acid before contacting the treated fly ash with other ceramic materials such as clays has multiple advantages. For example, this minimises the amount of acid that is needed since in this application it is only the fly ash that actually needs acid treatment. The inventive process may require the removal of the soluble products of the chemical reaction between the acid and the fly ash.

In addition, contacting the fly ash only with acid makes filtering of the solid suspension easier since fly ash does not swell (and hence gel) in aqueous mixes as many clays do. The gelling and thickening associated with washing clays as well as fly ashes would make separation of the supernatant liquid slow and complex unless very dilute solutions are used.

### Step (a) obtaining the acidic fluid bed combustion fly ash slurry

Fluid bed combustion fly ash is contacted with an acidic aqueous solution to obtain acidic fluid bed combustion fly ash slurry. Preferably, the pH of step (a) is in the range of from 2.0 to less than 7.0, preferably from 2.0 to 6.0, or from 2.0 to 5.0, or even from 2.3 to 4.0.

### Step (b) obtaining the solid acid treated fluid bed combustion fly ash

Excess acid is removed from the slurry obtained in step (a) to obtain solid acid treated fluid bed combustion fly ash.

Typically, step (b) comprises the steps of rinsing the slurry, and removing the supernatant from the solid content. This typical rinsing step can be repeated a number of times, for example two or more times, or even three or more times, or even four or more times.

### Step (c) forming the granular ceramic mixture

During step (c), the following ingredients are contacted together:
(i) the solid acid treated fluid bed combustion fly ash obtained in step (b);
(ii) clay;
(iii) optionally, feldspar; and
(iv) optionally, other ingredients

### The granular ceramic mixture

The granular ceramic mixture comprises solid acid treated fluid bed combustion fly ash, clay, feldspar and optionally other ingredients.

Preferably, the granular ceramic mixture comprises:
(a) from 10wt% to 60wt%, or from 20wt% to 50wt% solid acid treated fluid bed combustion fly ash;
(b) from 15wt% to 55wt% clay;
(c) from 0wt% to 35wt%, or from 5wt% to 25wt%, feldspar; and
(d) optionally, other ingredients to 100wt%.

Preferably, the granular ceramic mixture comprises:
(a) from 20wt% to 50wt% solid acid treated fluid bed combustion fly ash;
(b) from 15wt% to 35wt% clay;
(c) from 0wt% to 35wt%, or from 5wt% to 25wt%, feldspar; and
(d) optionally, other ingredients to 100wt%.

### Fluid bed combustion fly ash

Suitable fluid bed combustion fly ash can be atmospheric fluid bed combustion fly ash, pressurized fluid bed combustion fly ash, or a combination thereof.

Suitable fluid bed combustion fly ash can be circulating fluid bed combustion fly ash, bubbling fluid bed combustion fly ash, or a combination thereof.

A preferred fluid bed combustion fly ash is circulating fluid bed combustion fly ash.

Typically, the fluid bed combustion fly ash comprises greater than 4.0wt% oxide of sulfur, or greater than 5.0wt%, or greater than 6.0wt%, or greater than 6.5wt%, or greater than 7.0wt%, or greater than 10wt% oxide of sulfur.

Typically, the fluid bed combustion fly ash is derived from coal, typically fluid bed combustion coal fly ash.

### Solid acid treated fluid bed combustion fly ash

Typically, the solid acid treated the fluid bed combustion fly ash comprises greater than 4.0wt% oxide of sulfur, or greater than 5.0wt%, or greater than 6.0wt%, or greater than 6.5wt%, or greater than 7.0wt%, or greater than 10wt% oxide of sulfur.

### Oxide of sulfur

Analysis of the elemental composition of fly ash is most commonly done by X-ray fluorescence (XRF) techniques. This measures the levels of the heavier elements, such as iron, aluminium, silicon, sulfate and calcium. The convention is that these are then reported as the equivalent stoichiometric level of oxide. Sulfur is reported as SO₃.

SO₃ is often referred to as "sulfate" in the ceramic literature even though the term "sulfate" technically refers to the SO₄²⁻ ion. Sometimes sulfur is reported as elemental sulfur but how the sulfur is reported makes no difference to the actual levels present. The present invention therefore uses the term "oxide of sulfur" to be more general. "Oxide of sulfur", SO₃ and "sulfate" are interchangeable terms when used herein.

The level of oxide of sulfur present in the fly ash can be determined using the following XRF method.

Suitable XRF equipment is the Epsilon 4 XRF analyser from Malvern Panalytical using sample disks prepared using an Aegon 2 automatic fusion equipment for sample disk preparation from Claisse. The ash sample is automatically dissolved in molten lithium borate flux and formed into a disk. This is then placed in the Epsilon 4 for analysis. Equipment should be operated as per manufacturer's instructions. When measuring for SO₃, the Epsilon 4 should be set to a voltage of 4.5 kV, a current of 3000µa, use helium as the medium, not use a filter, and have a measurement time of 450 s.

### Clay

A suitable clay is a standard clay such as Ukrainian clay or illitic clay. A preferred clay is a combination of standard clay and high plasticity clay. The weight ratio of standard clay to high plasticity clay may in the range of from 2:1 to 5:1. A suitable clay is a high plasticity clay such as bentonite clay. Typically, a high plasticity clay has an Attterburg Plasticity Index of greater than 25.0. Typically, a standard clay has an Atterburg Plasticity Index of 25.0 or less. The amount of high plasticity clay can be selected to provide sufficient robustness and flowability for granular ceramic mixtures.

### Feldspar

Suitable feldspars include sodium and/or potassium feldspars.

### Optional other ingredients

Other optional ingredients include chemical additives and binders.

### Acidic aqueous solution

The acidic aqueous solution can be an organic acidic aqueous solution, an inorganic acidic aqueous solution, or a combination thereof. The acidic aqueous solution is preferably a weak acid.

Suitable acidic aqueous solutions are selected from acetic acid (ethanoic acid), ascorbic acid ((2R)-2-[(1S)-1,2-dihydroxyethyl]-3,4-dihydroxy-2H-furan-5-one), hydrochloric acid, nitric acid, oxalic acid (ethandioic acid), sulfuric acid, and any combination thereof.

Preferably, the acidic aqueous solution is an aqueous solution of acetic acid (ethanoic acid). A suitable source of acetic acid (ethanoic acid) is vinegar.

Typically, during step (a), the acidic aqueous solution has a molarity of from 0.2M to 3.0M, or from 0.4M to 2.0M, or even 0.5M to 1.5M.

Preferably, the pH of the acidic aqueous solution during step (a) is in the range of from 2.0 to less than 7.0, preferably from 2.0 to 6.0, or from 2.0 to 5.0, or even from 2.3 to 4.0.

Preferably, the acid is not sulfuric acid, and the acidic aqueous solution is not an aqueous solution of sulphuric acid.

### Examples

### Inventive example

Acid treated FBC fly ash was prepared by taking FBC fly ash and washing it in 10% (by volume) acetic acid (ethanoic acid) aqueous solution at the ratio of 50g FBC fly ash to 500ml of acetic acid (ethanoic acid) aqueous solution. The mixture was vigorously stirred at ambient for 60mins.

After mixing, the mixture was allowed to settle, and the supernatant liquid poured off. The mix was then rinsed with fresh water by swirling, allowing the solid to settle and decanting the supernatant liquid. The wet ash was then dried at 120°C for 1 hour to form dried acid treated FBC fly ash.

The dried acid treated FBC fly ash was then mixed with clay and feldspar and made into a ceramic article according to the process below.

100g of acid treated fluid bed combustion fly ash was mixed with 50g of illitic clay and 50g sodium feldspar to form the granular ceramic mixture. The mixture was milled, sieved and wetted. 140g of the above granular ceramic mixture was then uniaxially pressed in a rectangular mild steel mold (155x40mm) to a pressure of 40MPa which was held for 1.5min (90sec). The formed body was released from the mold and placed into a 110°C oven to dry.

The dried body was fired in an electric kiln at a ramp rate of 2.5°C/min to 1160°C. The temperature was held at the top temperature for 30min. The fired body was then allowed to cool down naturally (hence slowly) to room temperature.

No cracking was observed in the fired body.

### Comparative Examples

The same procedure was followed as above, except that the fluid bed ash, whilst being identical in every other way to the acid treated fluid bed combustion fly ash apart from the acid treatment step, was not subjected to the acid washing step and was instead directly mixed with the other ingredients.

Cracking was observed in this fired body.

A comparative example of an identical composition to the FBC fly ash comparative example, made in exactly the same manner but made from PCC fly ash, did not show any cracking.

## Claims

1. A process for preparing a granular ceramic mixture, wherein the process comprises the steps of:
(a) contacting fluid bed combustion fly ash with an acidic aqueous solution to obtain an acidic fluid bed combustion fly ash slurry;
(b) removing excess acid from the slurry obtained in step (a) to obtain solid acid treated fluid bed combustion fly ash;
(c) contacting together:
(i) the solid acid treated fluid bed combustion fly ash obtained in step (b);
(ii) clay;
(iii) optionally, feldspar; and
(iv) optionally, other ingredients.
to form the granular ceramic mixture.

2. A process according to claim 1, wherein the acidic aqueous solution is selected from an aqueous solution of acetic acid (ethanoic acid), aqueous solution of ascorbic acid ((2R)-2-[(1S)-1,2-dihydroxyethyl]-3,4-dihydroxy-2H-furan-5-one), an aqueous solution of hydrochloric acid, an aqueous solution of nitric acid, an aqueous solution of oxalic acid (ethandioic acid), and any combination thereof.

3. A process according to any preceding claim, wherein the acidic aqueous solution is an aqueous solution of acetic acid (ethanoic acid).

4. A process according to any preceding claim, wherein the acidic aqueous solution has a molarity of from 0.2M to 3.0M.

5. A process according to any preceding claim, wherein step (b) comprises the steps of rinsing the slurry, and removing the supernatant from the solid content to obtain the solid acid treated fluid bed combustion fly ash.

6. A process according to any preceding claim, wherein the granular ceramic mixture comprises:
(a) from 10wt% to 60wt% fluid bed combustion fly ash;
(b) from 15wt% to 55wt% clay;
(c) from 0wt% to 35wt% feldspar; and
(d) optionally, other ingredients to 100wt%.

7. A process according to any preceding claim, wherein the granular ceramic mixture comprises:
(a) from 20wt% to 50wt% fluid bed combustion fly ash;
(b) from 15wt% to 35wt% clay;
(c) from 0wt% to 25wt% feldspar; and
(d) optionally, other ingredients to 100wt%.

8. A process according to any preceding claim, wherein the fluid bed combustion fly ash is circulating fluid bed combustion fly ash.

9. A process according to any preceding claim, wherein the fluid bed combustion fly ash comprises greater than 5.0wt% oxide of sulfur.

10. A process according to any preceding claim, wherein the fluid bed combustion fly ash comprises greater than 10wt% oxide of sulfur.

## Patentansprüche

1. Verfahren zum Herstellen einer körnigen Keramikmischung, wobei das Verfahren die folgenden Schritte umfasst:
(a) Inkontaktbringen von Flugasche aus Wirbelschichtverbrennung mit einer sauren wässrigen Lösung, um eine saure Aufschlämmung von Flugasche aus Wirbelschichtverbrennung zu erhalten;
(b) Entfernen überschüssiger Säure aus der in Schritt (a) erhaltenen Aufschlämmung, um eine feste säurebehandelte Flugasche aus Wirbelschichtverbrennung zu erhalten;
(c) gemeinsames Inkontaktbringen:
(i) der in Schritt (b) erhaltenen festen säurebehandelten Flugasche aus Wirbelschichtverbrennung;
(ii) Ton;
(iii) optional Feldspat; und
(iv) optional anderer Inhaltsstoffe
um die körnige Keramikmischung zu bilden.

2. Verfahren nach Anspruch 1, wobei die saure wässrige Lösung aus einer wässrigen Lösung von Essigsäure (Ethansäure), einer wässrigen Lösung von Ascorbinsäure ((2R)-2-[(1S)-1,2-Dihydroxyethyl]-3,4-Dihydroxy-2H-furan-5-on), einer wässrigen Lösung von Salzsäure, einer wässrigen Lösung von Salpetersäure, einer wässrigen Lösung von Oxalsäure (Ethandisäure) und jeder Kombination davon ausgewählt ist.

3. Verfahren nach einem vorhergehenden Anspruch, wobei die saure wässrige Lösung eine wässrige Lösung von Essigsäure (Ethansäure) ist.

4. Verfahren nach einem vorhergehenden Anspruch, wobei die saure wässrige Lösung eine Molarität von 0,2 M bis 3,0 M aufweist.

5. Verfahren nach einem vorhergehenden Anspruch, wobei Schritt (b) die Schritte eines Spülens der Aufschlämmung und Entfernens des Überstands von dem Feststoffgehalt umfasst, um die feste säurebehandelte Flugasche aus Wirbelschichtverbrennung zu erhalten.

6. Verfahren nach einem vorhergehenden Anspruch, wobei die körnige Keramikmischung Folgendes umfasst:
(a) von 10 Gew.-% bis 60 Gew.-% Flugasche aus Wirbelschichtverbrennung;
(b) von 15 Gew.-% bis 55 Gew.-% Ton;
(c) von 0 Gew.-% bis 35 Gew.-% Feldspat; und
(d) optional andere Inhaltsstoffe auf 100 Gew.-%.

7. Verfahren nach einem vorhergehenden Anspruch, wobei die körnige Keramikmischung Folgendes umfasst:
(a) von 20 Gew.-% bis 50 Gew.-% Flugasche aus Wirbelschichtverbrennung;
(b) von 15 Gew.-% bis 35 Gew.-% Ton;
(c) von 0 Gew.-% bis 25 Gew.-% Feldspat; und
(d) optional andere Inhaltsstoffe auf 100 Gew.-%.

8. Verfahren nach einem vorhergehenden Anspruch, wobei die Flugasche aus Wirbelschichtverbrennung zirkulierende Flugasche aus Wirbelschichtverbrennung ist.

9. Verfahren nach einem vorhergehenden Anspruch, wobei die Flugasche aus Wirbelschichtverbrennung mehr als 5,0 Gew.-% Schwefeloxid umfasst.

10. Verfahren nach einem vorhergehenden Anspruch, wobei die Flugasche aus Wirbelschichtverbrennung mehr als 10 Gew.-% Schwefeloxid umfasst.

## Revendications

1. Procédé de préparation d'un mélange céramique granulaire, le procédé comprenant les étapes de :
(a) mise en contact des cendres volantes de combustion en lit fluidisé avec une solution aqueuse acide pour obtenir une boue acide de cendres volantes de combustion en lit fluidisé ;
(b) élimination de l'excès d'acide de la boue obtenue à l'étape (a) pour obtenir des cendres volantes de combustion en lit fluidisé traitées à l'acide solides ;
(c) mise en contact conjointement :
(i) des cendres volantes de combustion en lit fluidisé traitées à l'acide solides obtenues à l'étape (b) ;
(ii) de l'argile ;
(iii) facultativement, du feldspath ; et
(iv) facultativement, d'autres ingrédients
pour former le mélange céramique granulaire.

2. Procédé selon la revendication 1, dans lequel la solution aqueuse acide est choisie parmi une solution aqueuse d'acide acétique (acide éthanoïque), une solution aqueuse d'acide ascorbique ((2R)-2-[(1S)-1,2-dihydroxyéthyl]-3,4-dihydroxy-2H-furan-5-one), une solution aqueuse d'acide chlorhydrique, une solution aqueuse d'acide nitrique, une solution aqueuse d'acide oxalique (acide éthanedioïque), et toute combinaison de celles-ci.

3. Procédé selon une quelconque revendication précédente, dans lequel la solution aqueuse acide est une solution aqueuse d'acide acétique (acide éthanoïque).

4. Procédé selon une quelconque revendication précédente, dans lequel la solution aqueuse acide a une molarité de 0,2 M à 3,0 M.

5. Procédé selon une quelconque revendication précédente, dans lequel l'étape (b) comprend les étapes de rinçage de la boue, et d'élimination du surnageant du contenu solide pour obtenir les cendres volantes de combustion en lit fluidisé traitées à l'acide solides.

6. Procédé selon une quelconque revendication précédente, dans lequel le mélange céramique granulaire comprend :
(a) de 10 % en poids à 60 % en poids de cendres volantes de combustion en lit fluidisé ;
(b) de 15 % en poids à 55 % en poids d'argile ;
(c) de 0 % en poids à 35 % en poids de feldspath ; et
(d) facultativement, d'autres ingrédients jusqu'à 100 % en poids.

7. Procédé selon une quelconque revendication précédente, dans lequel le mélange céramique granulaire comprend :
(a) de 20 % en poids à 50 % en poids de cendres volantes de combustion en lit fluidisé ;
(b) de 15 % en poids à 35 % en poids d'argile ;
(c) de 0 % en poids à 25 % en poids de feldspath ; et
(d) facultativement, d'autres ingrédients jusqu'à 100 % en poids.

8. Procédé selon une quelconque revendication précédente, dans lequel les cendres volantes de combustion en lit fluidisé sont des cendres volantes de combustion en lit fluidisé circulant.

9. Procédé selon une quelconque revendication précédente, dans lequel les cendres volantes de combustion en lit fluidisé contiennent plus de 5,0 % en poids d'oxyde de soufre.

10. Procédé selon une quelconque revendication précédente, dans lequel les cendres volantes de combustion en lit fluidisé contiennent plus de 10 % en poids d'oxyde de soufre.
